# EUROPEAN PATENT SPECIFICATION

(11) **EP 1 129 932 B1**
(45) Date of publication and mention of the grant of the patent: **18.05.2005**
(21) Application number: 01103471.7
(22) Date of filing: 14.02.2001
(51) Int. Cl.: B62M 23/02

(54) **Motor-driven bicycle**
Antriebseinheit für Fahrräder
Bicyclette à moteur

(30) Priority: 01.03.2000 JP 2000055085
(43) Date of publication of application: 05.09.2001
(73) Proprietor: Honda Giken Kogyo Kabushiki Kaisha, Minato-ku, Tokyo (JP)
(72) Inventor: Sakagami, Koji,c/o K.K. Honda Gijutsu Kenkyusho, Wako-shi, Saitama (JP)
(74) Representative: Liska, Horst, Dr.-Ing.

(56) References cited:
- EP-A- 0 222 179
- EP-A- 0 937 638
- EP-A- 0 976 649
- US-A- 5 937 964
- PATENT ABSTRACTS OF JAPAN vol. 1998, no. 01, 30 January 1998 (1998-01-30) & JP 09 240564 A (YAMAHA MOTOR CO LTD), 16 September 1997 (1997-09-16)
- PATENT ABSTRACTS OF JAPAN vol. 1998, no. 02, 30 January 1998 (1998-01-30) & JP 09 263289 A (YAMAHA MOTOR CO LTD), 7 October 1997 (1997-10-07)

## Description

The present invention relates to a motor-driven bicycle according to the preamble part of claim 1.

Such a bicycle is known from EP-A-0 222 179. This document discloses a motor-driven bicycle including a drive motor for generating a self-running power in response to an activation of a twist grip by a driver. The bicycle further includes a gear shifter connecting between that drive motor and a drive wheel, and means for detecting a vehicle speed. The known motor-driven bicycle finally comprises means for determining a self-running power to be generated by the drive motor on the basis of an amount by which the twist grip has been twisted by the driver.

Unlike a motor-assisted bicycle, called an assist bicycle, including an electric motor for generating an assisting power in response to a leg-power inputted to a crank shaft, wherein a synthetic power of the leg-power and assisting power is transmitted to a drive wheel, a motor-driven bicycle including a drive motor for generating a self-running power in response to, typically, an opening degree of a throttle lever has been proposed, for example, in Japanese Patent Laid-open No. Hei 9-263289.

A motor-driven bicycle, including a stepping gear shifter different from a continuous variable transmission mounted on a conventional motor-driven scooter or the like and an actuator of the stepping gear shifter, has a technical problem that if a difference occurs between output torques at adjacent two of gear steps before and after gear-shift, a desirable gear-shift feeling cannot be obtained.

The object of the present invention is to solve the above-described problem of the prior art motor-driven bicycle, and to provide a motor-driven bicycle capable of obtaining a desirable gear-shift feeling upon automatic gear-shift.

To achieve the above object, according to the present invention, there is provided a motor-driven bicycle according to claim 1, i.e. a bicycle including a drive motor for generating a self-running power in response to a throttle lever operation by a driver, a gear shifter connected between the drive motor and a drive wheel, and means for detecting a vehicle speed, wherein the motor-driven bicycle further includes self-running power determining means for determining a self-running power to be generated by the drive motor on the basis of an operated amount of the throttle lever operation, a gear step of the gear-shifter, and a vehicle speed.

The throttle lever operation in the following is also referred to as "self-running operation".

With the above-described feature, since a self-running power to be generated by the drive motor can be finely set to an optimum value on the basis of the operated amount of a self-running operation, a gear-step of the gear shifter, and a vehicle speed, it is possible to make output torques at adjacent two of gear steps before and after gear-shift correspond to each other upon gear-shift, and hence to obtain a desirable shift feeling.

In the above prior art motor-driven bicycle, since it is not required to generate a self-running power in a state in which a brake lever is being operated during running of the vehicle, the self-running power is limited during operation of the brake lever for keeping the stored energy; however, since the motor-driven bicycle is heavier than a conventional bicycle, at the time of start-up of the vehicle on a slope for example, a self-running power is generated by operating a throttle lever from the state in which the brake lever is being operated for smoothening the start-up of the vehicle.

In the prior art motor-driven bicycle, however, since the drive motor is not controlled on the basis of a braking operation and a vehicle speed, there may occur inconvenience that the drive motor may generate a self-running power although brake operation is being performed during running of the vehicle or the drive motor may be difficult to generate, at the time of start-up of the vehicle, a self-running power from the braking state so as to smoothen the start-up of the vehicle.

To solve the above problem, according to a preferred embodiment of the present invention, there is provided a motor-driven bicycle exhibiting all features of dependent claim 8.

With the above-described feature, since a self-running power determined on the basis of an amount of a self-running operating by a driver can be controlled by a braking operation and a vehicle speed, the self-running power at the time of braking operation can be optimized.

Embodiments of the present invention as defined in the main claim and in the dependent subclaims may exhibit the following effects:
(1) Since a self-running power to be generated by the drive motor can be set to an optimum value with the operated amount of a self-running operation, a gear step of the gear shifter, and a vehicle speed taken as parameters, it is possible to make output torques at adjacent two of gear steps before and after gear-shift correspond to each other upon gear-shift, and hence to obtain a desirable shift feeling.
(2) Since a vehicle speed is detected on the basis of a detection signal of the sensor provided for detecting a rotational speed of the crank pedals, it is possible to eliminate the need of provision of a vehicle speed sensor.
(3) Since a vehicle speed is detected on the basis of a rotational speed of the drive motor and a gear step of the gear shifter, it is possible to eliminate the need of provision of a vehicle speed sensor.
(4) Since a gear step of the gear shifter is detected on the basis of a rotational speed of the drive motor and a vehicle speed, it is possible to eliminate the need of provision of a vehicle speed sensor.
(5) Since a target value of self-running output of the drive motor determined in response to the operated amount of a self-running operation is obtained from the mapping table, it is possible to easily perform the setting of the target value, the change thereof, and the like.
(6) Since a self-running power determined on the basis of an amount of a self-running operation by a driver can be controlled on the basis of the presence or absence of braking operation and a vehicle speed, the self-running power at the time of braking operation can be optimized.
(7) Since the drive motor is allowed to generate, when a braking operation is detected during running of the vehicle, a drive force being small enough to bring about a state in which no load is apparently applied to the drive motor, it is possible to prevent useless power consumption due to operation of the drive motor during braking operation. Further, since the drive motor does not cause any rotational load even during braking operation, it is possible to obtain a natural brake feeling corresponding to an operated amount of the brake.
(8) Since the drive motor is allowed to generate, when a self-running operation is performed in a vehicle stoppage state in which braking operation is being performed, a drive force corresponding to an amount of the self-running operation, it is possible to prevent "slip-down" of the vehicle upon start-up of the vehicle on a slope.
(9) Since a self-running power generated by the drive motor is, when a self-running operation is performed in a vehicle stoppage state in which braking operation is being performed, gradually increased up to a value corresponding to an amount of the self-running operation, it is possible to obtain smooth acceleration feeling.

Hereinafter, the present invention will be described in detail with reference to the accompanying drawings.
- Fig. 1: is a view showing a configuration of a motor-driven bicycle to which the present invention is applied.
- Fig. 2: is a block diagram of a controller shown in FIG. 1.
- Fig. 3: is a flow chart showing an operation of the controller.
- Fig. 4: is a flow chart showing a rapid acceleration suppressing control.
- Fig. 5: is a flow chart showing a gear-shift control.
- Fig. 6: is a flow chart showing a motor output limiting control.
- Fig. 7: is a view showing a gear-shift control method upon shift-up from the "second speed" to the "third speed".
- Fig. 8: is a view showing a gear-shift control method upon shift-down from the "second speed" to the "first speed".
- Fig. 9: is a view showing a gear-shift control method upon shift-up from the "first speed" to the "second speed".
- Fig. 10: is aview showing a method of setting a gear-shift vehicle speed Vch23 between the "second speed" and the "third speed".
- Fig. 11: is a view showing a method of setting a gear-shift vehicle speed Vch12 between the "first speed" and the "second speed".
- Fig. 12: is a block diagram of another embodiment of the controller shown in FIG. 1.

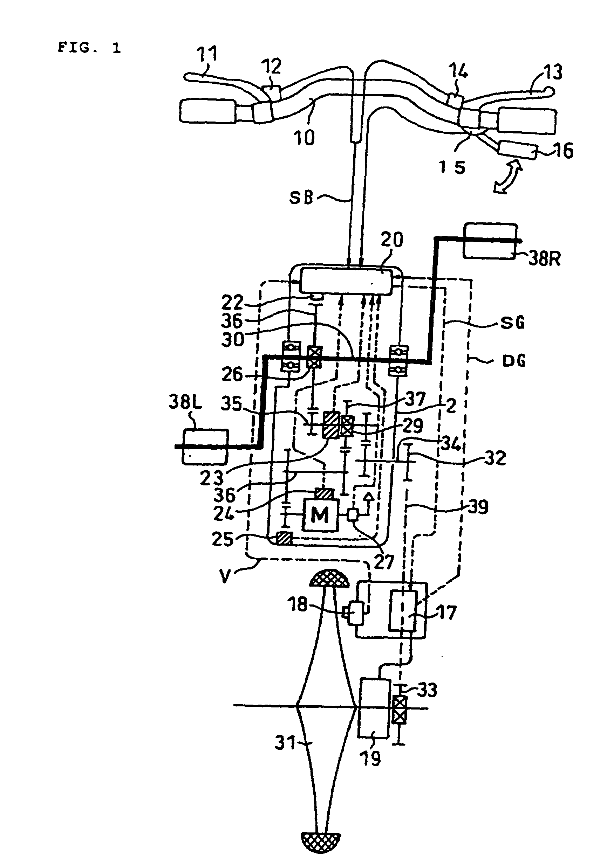

FIG. 1 is a view showing a configuration of a motor-driven bicycle to which the present invention is applied. In this figure, parts not necessary for description of the present invention are omitted.

Like a conventional bicycle, a handlebar 10 includes at its left end portion a brake lever 11 for a rear wheel and at its right end portion a brake lever 13 for a front wheel. The handlebar 10 also includes in the vicinities of fulcrums of the brake levers 11 and 13 brake switches 12 and 14 for detecting operational states of the brake levers 11 and 13 and outputting during-braking signals SB. The handlebar 10 further includes at its right end portion a throttle lever 16 as self-running input means for indicating generation of a self-running power to a drive motor M (which will be described later), and a throttle opening sensor 15 for detecting an operated angle θth as an operated amount.

A body frame has at its central portion a power unit 2 for selectively carrying out "self-running" by the drive motor M and "assist-running" for assisting a leg power by a drive force of the drive motor M. A leg-power inputted to a crank shaft 30 from left and right crank pedals 38L and 38R is transmitted via a one-way clutch 26 to a large-diameter gear 36 coaxially connected to the crank shaft 30, and is further transmitted via a first idle shaft 35 to an output shaft 34. The one-way clutch 26 allows transmission of a rotational force from the crank shaft 30 to the large-diameter gear 36, and prohibits transmission of a rotational force from the large-diameter gear 36 to the crank shaft 30.

A drive force generated by the drive motor M is transmitted via a second idle shaft 36 to an idle gear 37. The idle gear 37 is connected via a one-way clutch 29 to the first idle shaft 35. The drive force having been transmitted to the idle gear 37 is transmitted via the first idle shaft 35 to the output shaft 34. One end of the output shaft 34 is exposed to the outside of the power unit 2, and a drive sprocket 32 is connected to the exposed end of the output shaft 34.

A motor rotation sensor 25 detects a rotational speed NM of the drive motor M. A temperature sensor 24 detects a temperature TM of the drive motor M. A leg-power sensor 23 detects a leg-power inputted to the crank shaft 30. A crank pedal rotation sensor 22 detects a rotational speed of the crank pedals 38 (38L, 38R) on the basis of the rotational speed of the large-diameter gear 36. A current sensor 27 detects a drive current IM of the drive motor M. Output signals of the above-described sensors are inputted to a controller 20.

A driven sprocket 33 and a four-step gear shifter 19 are provided on an axle of a rear wheel 31 as a drive wheel. The drive sprocket 32 of the output shaft 34 is connected to the driven sprocket 33 via a chain 39. An automatic gear-shift actuator 17 outputs a gear-shift step signal DG representative of a gear-shift step in response to a gear-shift command SG outputted from the controller 20. The gear shifter 19 is driven on the basis of the gear-shift step signal DG. A rotational speed V of the rear wheel 31 is detected by a vehicle speed sensor 18, and a signal of the vehicle speed sensor 18 is inputted to the controller 20.

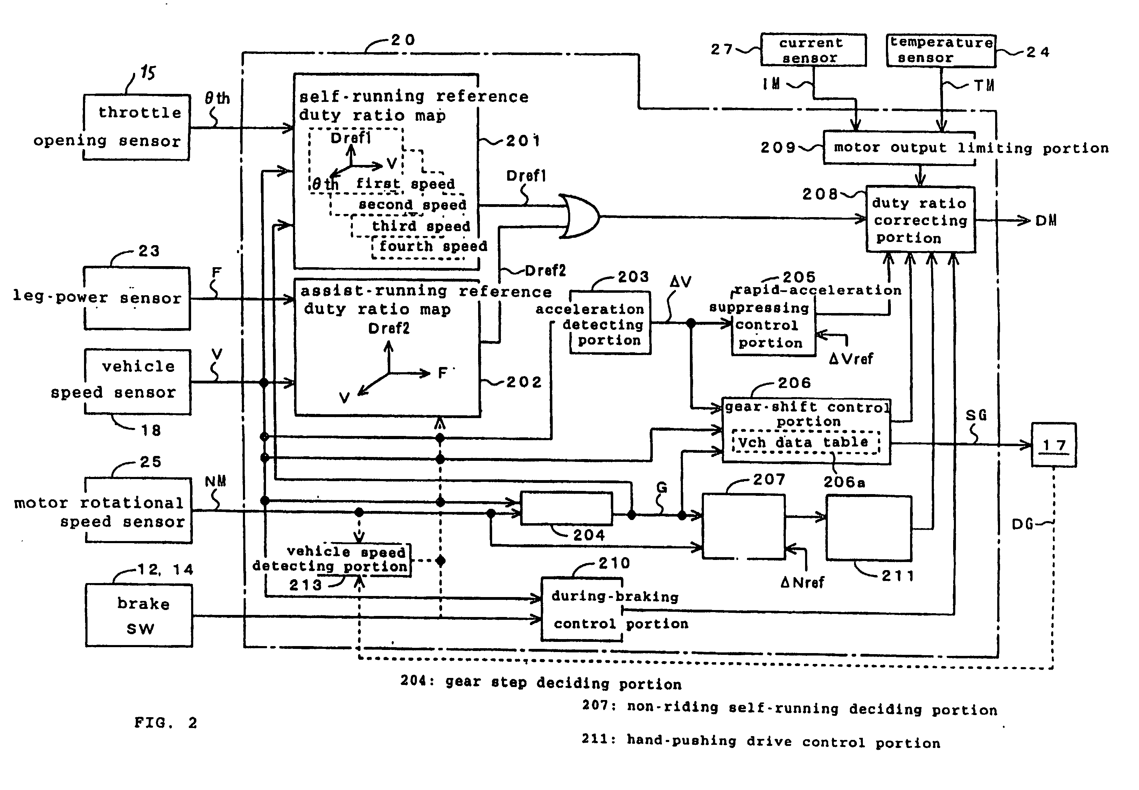

FIG. 2 is a block diagram showing a configuration of a main portion of the controller 20. In this figure, the same characters as those shown in FIG. 1 designate the same or similar parts.

In a self-running reference duty ratio map 201, a reference duty ratio Dref1 of a drive current IM to be supplied to the drive motor M upon self-running is previously registered in the form of a mapping table with the throttle opening angle θth detected by the throttle opening sensor 15, the vehicle speed V, and a gear step G taken as parameters.

In an assist-running reference duty ratio map 202, a reference duty ratio Dref2 of the drive current IM to be supplied to the drive motor M upon assist-running is previously registered in the form of a mapping table with the leg-power F detected by the leg-power sensor 23 and the vehicle speed V detected by the vehicle speed sensor 18 taken as parameters.

It should be noted that in place of detection of the vehicle speed V by the vehicle speed sensor 18, the vehicle speed V may be detected, by a vehicle speed detecting portion 213 additionally provided, on the basis of the gear-shift step signal DG, which is representative of the gear-shift step G and which is outputted from the automatic gear-shift actuator 17, and the motor rotational speed.

An acceleration detecting portion 203 detects an acceleration ΔV on the basis of a rate of change in vehicle speed V with elapsed time. A gear step deciding portion 204 decides the present gear step G on the basis of the detected vehicle speed V and motor rotational speed NM. A rapid acceleration suppressing control portion 205 compares the detected acceleration ΔV with a reference acceleration ΔVref, and instructs, if the detected acceleration ΔV is more than the reference acceleration ΔVref, a duty ratio correcting portion 208 (which will be described later) to correct a duty ratio so as to suppress rapid acceleration.

Referring to a gear shifting vehicle speed (Vch) data table 206a, a gear-shift control portion 206 decides, on the basis of the detected acceleration ΔV and vehicle speed V and the present gear step G decided by the gear step deciding portion 204, whether or not the present running state is a gear-shift timing state. The decided result is supplied to the duty ratio correcting portion 208 and is also outputted to the gear-shift actuator 17.

A non-riding self-running deciding portion 207 decides, on the basis of the present gear step G and motor rotational speed NM, whether or not the present self-running operation is performed in the driver's non-riding state. If it is decided that the self-running operation is performed in the driver's non-riding state, a hand-pushing drive control portion 211 instructs the duty ratio correcting portion 208 to correct a duty ratio so as to generate a self-running power corresponding to a walking speed.

A during-braking control portion 210 instructs the duty ratio correcting portion 208 to correct a duty ratio so as to control a self-running power on the basis of the presence or absence of a braking operation and the vehicle speed V. To be more specific, if the on-states of the brake switches 12 and 14 are detected during running of the vehicle, the during-braking control portion 210 instructs the duty ratio correcting portion 208 to correct a duty ratio so as to allow the drive motor M to generate a drive force being small enough to bring about a state in which no load is apparently applied to the drive motor M. Meanwhile, if a self-running operation is performed in a vehicle stoppage state in which the brake switches 12 and 14 are in the on-states, the during-braking control portion 210 instructs the duty ratio correcting portion 208 to correct a duty ratio so as to allow the drive motor M to generate a drive force corresponding to an operated amount of the self-running operation.

A motor output limiting portion 209 monitors an operational state of the drive motor M on the basis of the drive current IM of the drive motor M detected by the current sensor 27 and the temperature TM of the drive motor M detected by the temperature sensor 24, and instructs, if the drive motor M is in a severe operational state, the duty ratio correcting portion 208 to correct a duty ratio so as to limit the self-running power.

The duty ratio correcting portion 208 corrects, as will be described in detail later, the reference duty ratio Dref1 or Dref2 obtained from the duty ratio map 201 or 202 on the basis of the instructions supplied from the rapid acceleration suppressing control portion 205, the gear-shift control portion 206, the hand-pushing control portion 211, the during-braking control portion 210, and the motor output limiting portion 209, and outputs the corrected result as a target duty ratio DM.

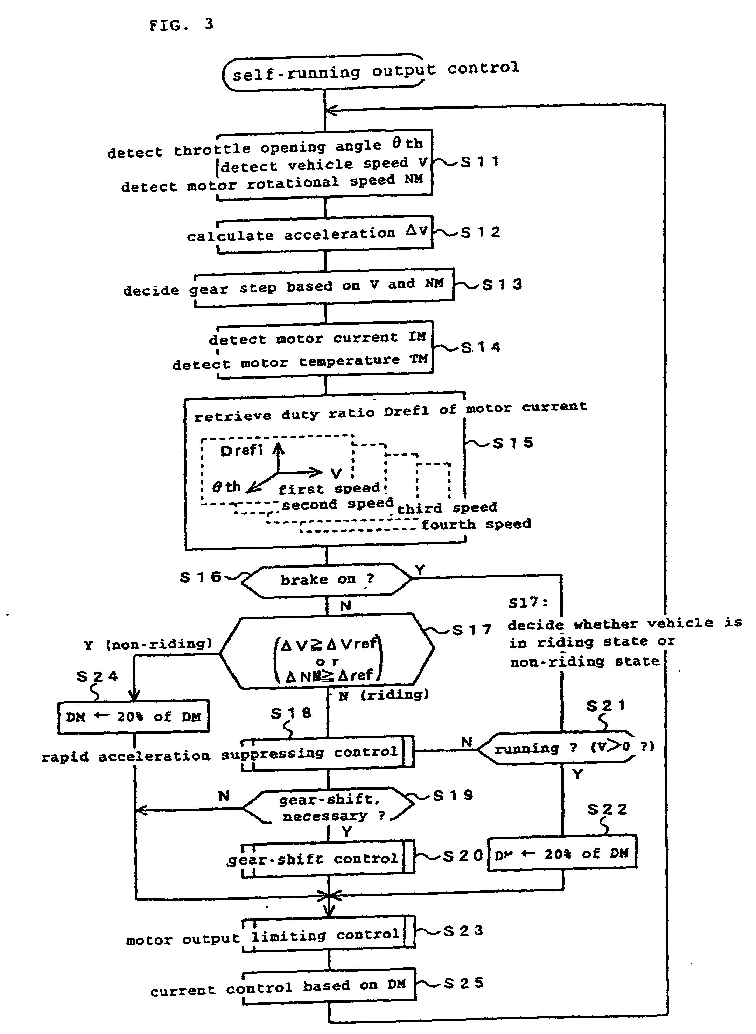

A method of controlling the drive motor M upon self-running by the controller 20 will be described with reference to a flow chart shown in FIG. 3.

In step S11, an opening angle θth of the throttle lever 16 is detected as an operated amount of the self-running operation by the throttle opening sensor 15; a vehicle speed V is detected by a vehicle speed sensor 18; and a rotational speed NM of the drive motor M is detected by the motor rotation sensor 25. In step S12, an acceleration ΔV is calculated on the basis of the vehicle speed V detected in step S11 by the acceleration detecting portion 203. In step S13, the present gear step G is decided on the basis of a correlation between the vehicle speed V and the motor rotational speed NM by the gear step deciding portion 204. It should be noted that the present gear step G may be decided on the basis of the gear-shift step signal DG outputted from the automatic gear-shift actuator 17.

In step S14, a drive current IM of the drive motor M is detected by the current sensor 27, and a temperature TM of the drive motor M is detected by the temperature sensor 24. In step S15, a reference duty ratio Dref1 upon self-running is retrieved from the duty ratio map 201 for self-running on the basis of the throttle opening angle θ th and vehicle speed V detected in step S11 and the present gear step G decided in step S13.

In step S16, on the basis of the states of the brake switches 12 and 14, it is decided by the during-braking control portion 210 whether or not a braking operation has been performed. If it is decided that the braking operation has not been performed, the process goes on to step S17. In step S17, on the basis of an increase ratio ΔNM of the motor rotational speed NM, it is decided by the non-riding self-running deciding portion 207 whether or not the driver has operated the throttle lever 16 in the driver's non-riding state. If the increase ratio ΔNM of the motor rotational speed NM is a reference increase ratio ΔNref or more, it is decided that the driver has operated the throttle lever 16 in the driver's non-riding state, and the process goes on to step S24. If the increase ratio ΔNM is less than the reference increase ratio ΔNref, it is decided that the driver has operated the throttle lever 16 in the driver's riding state, and the process goes on to step S18.

The parameter for deciding whether or not the driver has operated the throttle lever 16 in the driver's non-riding state is not limited to the above-described increase ratio ΔNM of the motor rotational speed NM. For example, the acceleration ΔV may be used as the decision parameter. In this case, if the acceleration ΔV is larger than a reference acceleration, it may be decided that the driver has operated the throttle lever 16 in the driver's non-riding state. Alternatively, a change ratio of the drive current of the drive motor M may be used as the decision parameter. In this case, if the change ratio of current is larger than a reference change ratio of current, it may be decided that the driver has operated the throttle lever 16 in the driver's non-riding state.

In this way, according to this embodiment, it is decided, on the basis of the increase ratio of the motor rotational speed, acceleration of the vehicle, or the change ratio of a drive current of the drive motor, whether or not the self-running operation is performed in the driver's non-riding state, and accordingly, it is possible to eliminate the need of providing a sensor or a switch for detecting the driver's non-riding state.

In step S18, a routine of "rapid acceleration suppressing control" for ensuring a sufficient acceleration performance while suppressing rapid acceleration is executed.

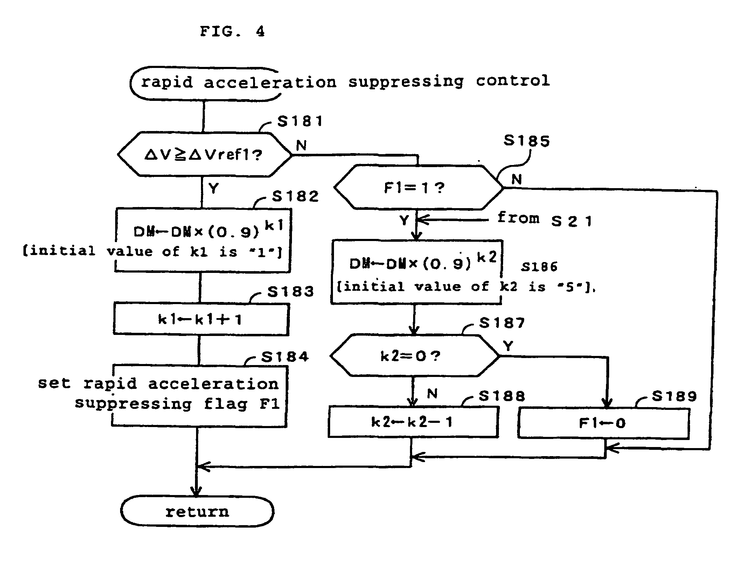

FIG. 4 is a flow chart indicating a control content of the "rapid acceleration suppressing control". The control content is determined such that an acceleration corresponding to an operated amount of the throttle lever 16 can be obtained irrespective of a road surface state, a deadweight, and the like by controlling a self-running power of the drive motor M on the basis of a correlation between an operated amount of the throttle lever 16 and an acceleration.

In step S181, the present acceleration ΔV is compared with a reference acceleration ΔVref by the rapid acceleration suppressing control portion 205. If the acceleration ΔV is more than the reference acceleration ΔVref, it is decided that the vehicle is in the rapid acceleration state, and the process goes on to step S182. In step S182, the reference duty ratio Dref1 retrieved from the duty ratio map 201 upon self-running is multiplied by a correction coefficient smaller than "1" by the duty ratio correcting portion 208, and the calculated result is taken as a target duty ratio DM.

In this embodiment, the correction coefficient is defined as "0.9^{k1}", and the initial value of the exponent k1 is set to "1". Accordingly, in the initial state, a value being 0.9 times the reference duty ratio Dref1 decided by the map 201 is registered as the target duty ratio DM. In step S183, the value of the exponent k1 is incremented by "1". In step S184, a rapid acceleration suppressing flag F1 is set to "1".

After that, since the above steps are repeated to increase the value of the exponent k1 until it is decided in step S181 that the acceleration ΔV is less than the reference acceleration ΔVref, the target duty ratio DM is gradually reduced depending on the value of the exponent k1.

If it is decided in step S181, as a result of gradually reducing the target duty ratio DM, that the acceleration ΔV is less than the reference acceleration ΔVref, the process goes on to step S185 in which it is decided that the rapid acceleration suppressing flag F1 is "1". If it is decided that the flag F1 is set to "1", the process goes on to step S186 in which the duty ratio having been gradually reduced in step S182 is gradually increased.

In step S186, the present target duty ratio DM is multiplied by a correction coefficient smaller than "1", and the calculated result is taken as a new target duty ratio DM. In this embodiment, the correction coefficient is defined as a value of "0.9^{k2}", and the initial value of the exponent k2 is set to "5". In the initial state, a value being 0.59 (= 0.95) times the target duty ratio DM is taken as a target duty ratio DM.

In step S187, it is decided whether or not the exponent k2 is reduced to "0". Since the exponent k2 is "5" in the initial state, the process goes on to step S188. In step S188, the value of the exponent k2 is decremented by "1". If it is decided in step S187 that the exponent k2 is "0", the process goes on to step S189 in which the rapid acceleration suppressing flag F1 is reset, thereby ending the routine of "rapid acceleration suppressing control" shown in FIG. 4.

In this way, according to this embodiment, if the acceleration ΔV is more than the reference acceleration ΔVref, the correction coefficient is, in step S182, gradually reduced for gradually reducing the target duty ratio DM, and thereafter, if the acceleration ΔV is less than the reference acceleration ΔVref, the correction coefficient is, in step S186, gradually increased for gradually increasing the target duty ratio DM, thereby compensating for the above-described gradually reduced amount of the target duty ratio DM. Accordingly, it is possible to obtain a sufficient acceleration performance while suppressing rapid acceleration.

Referring again to FIG. 3, in step S19, it is decided by the gear-shift control portion 206 whether or not automatic gear-shift should be performed. If an absolute value of a difference between the present vehicle speed V and a gear-shift vehicle speed Vch stored in the gear-shift vehicle speed data table 206a for each gear step is less than a reference speed VA, the process goes on to step S20 in which a "gear-shift control" is executed for automatic gear-shift. As the gear-shift vehicle speed Vch, a gear-shift vehicle speed Vch12 indicating a gear-shift timing between "first speed"/"second speed", a gear-shift vehicle speed Vch23 indicating a gear-shift timing between "second speed"/"third speed", and a gear-shift vehicle speed Vch34 indicating a gear-shift timing between "third speed"/"fourth speed" are registered. Either of the gear-shift vehicle speeds Vch12, Vch23, and Vch34 is selected on the basis of the present gear step G.

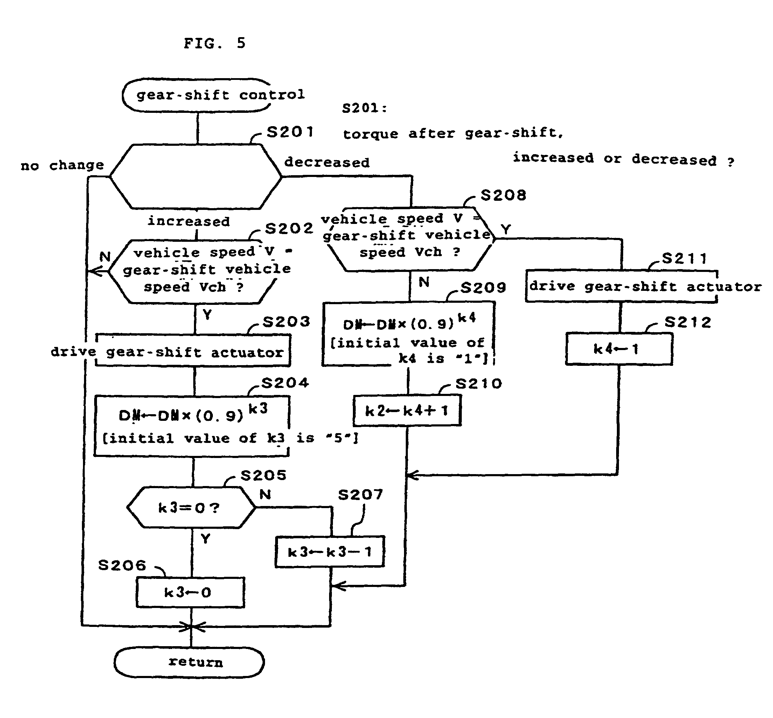

FIG. 5 is a flow chart indicating the routine of the "gear-shift control", which mainly shows the operation of the gear-shift control portion 206.

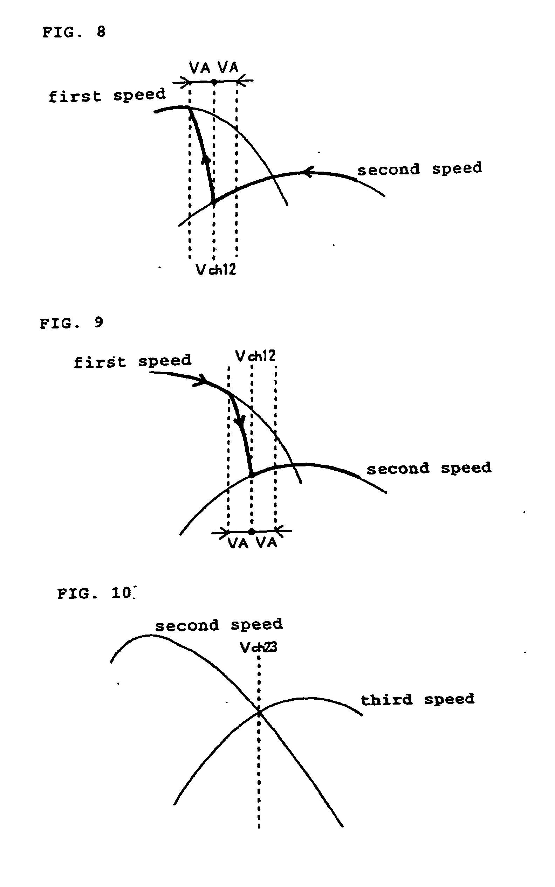

In step S201, it is decided whether or not a variation in torque caused by gear-shift is increased or decreased. For example, upon shift-up from the "second speed" to the "third speed", as shown in FIG. 7, a torque at the "third speed" is larger than that of the "second speed" at the gear-shift vehicle speed Vch23, and accordingly, it is decided in step S201 that the torque is increased after gear-shift, and the process goes on to step S202. Similarly, upon shift-down from the "second speed" to the "first speed", as shown in FIG. 8, a torque at the "first speed" is larger than that of the "second speed" at the gear-shift vehicle speed Vch12, and accordingly, it is decided in step S201 that the torque is increased after gear-shift, and the process goes on to step S202.

In step S202, referring to the gear-shift vehicle speed data table 206a, the gear-shift control portion 206 decides whether or not the present vehicle speed V reaches a predetermined gear-shift vehicle speed Vch corresponding to the present gear step. Here, if it is decided that, as shown in FIG. 7, the vehicle speed V reaches the gear-shift vehicle speed Vch23 during running at the "second speed" and thereby the timing of shift-up to the "third speed" comes, the process goes on to step S203 in which the gear-shift actuator 17 is driven for gear-shift (shift-up). In step S204, the present target duty ratio DM is multiplied by a correction coefficient smaller than "1", and the calculated result is taken as a new target duty ratio DM.

According to this embodiment, the correction coefficient is defined as "0.9^{k3}", and the initial value of the exponent k3 is set to "5". Accordingly, in the initial state, a value being 0.59 times (= 0.95) the present target duty ratio DM is taken as a target duty ratio DM. As a result, as shown in FIG. 7, a torque immediately after shift-up to the "third speed" is lowered to the same level as that of a torque at the "second speed", with a result that it is possible to obtain a desirable shift feeling.

In step S205, it is decided whether or not the exponent k3 is "0". Since the exponent k3 is "5" in the initial state, the process goes on to step S207 in which the exponent k3 is decremented by "1".

After that, the above-described steps are repeated, to gradually reduce the value of exponent k3, thereby gradually reducing the target duty ratio DM. Accordingly, as shown in FIG. 7, a self-running power of the drive motor M is rapidly reduced at the gear-shift vehicle speed Vch23, and then gradually increased to be returned to the original target duty ratio DM, thereby obtaining a proper torque corresponding to the gear step.

Similarly, as shown in FIG. 8, even in the case where the vehicle speed V is lowered to the gear-shift vehicle speed Vch12 during running at the "second speed" to be thus shifted down to the "first speed", the target duty ratio DM is reduced such that a torque immediately after shift-down to the "first speed" is reduced to the same level as that of a torque at the "second speed", and then the target duty ratio DM is gradually increased to be returned to the original target duty ratio DM, thereby obtaining a desirable shift feeling.

On the other hand, upon shift-up from the "first speed" to the "second speed", as shown in FIG. 9, since a torque at the "second speed" is smaller than a torque at the "first speed" at the gear-shift vehicle speed Vch12, it is decided in step S201 that the torque is reduced after gear-shift, and the process goes on to step S208 in which it is decided whether or not the present vehicle speed V reaches a predetermined gear-shift vehicle speed Vch12. If it is decided that the vehicle speed does not reach the gear-shift vehicle speed Vch12, the process goes on to step S209 in which the present target duty ratio DM is multiplied by a correction coefficient smaller than "1" and the calculated result is taken as a new target duty ratio DM.

In this embodiment, the correction coefficient is defined as "0.9^{k4}", and the initial value of the exponent k4 is set to "1". Accordingly, in the initial state, a value being 0.9 times the present target duty ratio DM is taken as a target duty ratio. In step S210, the exponent k4 is incremented by "1".

After that, the above-described steps are repeated until it is decided in step S208 that the vehicle speed V reaches the gear-shift vehicle speed Vch12, whereby the target duty ratio DM is gradually reduced according to the value of the exponent k4. Accordingly, as shown in FIG. 9, the torque is gradually reduced.

If it is decided in step S208 that the vehicle speed V reaches the gear-shift vehicle speed Vch12, the process goes on to step S211 in which the gear-shift actuator is driven for gear-shift. At this time, according to this embodiment, since a torque at the "first speed" is reduced to the same level as that of a torque at the "second speed" as shown in FIG. 9, that is, no difference in output torque lies between before and after gear-shift, it is possible to obtain a desirable shift feeling. In step S212, the exponent k4 is set to "1", thereby completing the routine of the "gear-shift control" shown in FIG. 5.

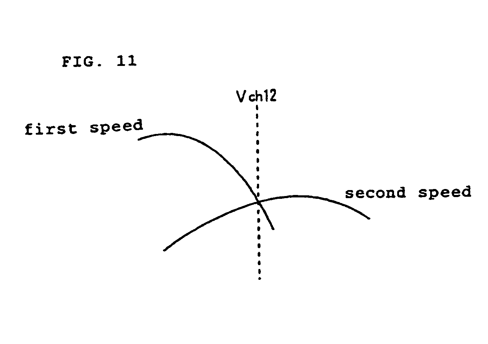

In the above description, to improve the shift feeling upon gear-shift, the duty ratio of a current supplied to the drive motor M is corrected such that torques of adjacent two of gear steps before and after gear-shift are made to substantially correspond to each other, the present invention is not limited thereto. For example, as shown in FIGS. 10 and 11, the gear-shift vehicle speed Vch, typically, Vch12 or Vch23 may be set to a speed at which torque curves of adjacent two of gear steps before and after gear-shift intersect each other, or a neighborhood of the speed. With this configuration, it is also possible to improve the shift feeling upon gear-shift.

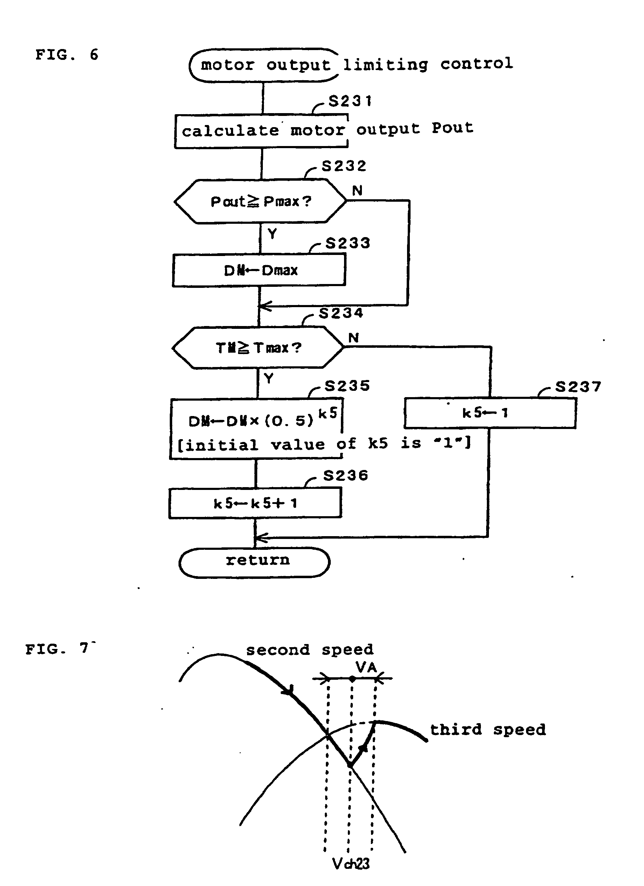

Referring again to FIG. 3, in step S23, a routine of "motor output limiting control" for preventing a severe operation of the drive motor is executed. The "motor output limiting control" will be described below with reference to a flow chart shown in FIG. 6.

In step S231, on the basis of a motor drive current IM detected by the current sensor 27 and the present target duty ratio DM, the present output Pout of the drive motor M is calculated. In step S232, the present output Pout of the drive motor M is compared with a specific maximum output Pmax. The maximum output Pmax is preferably set to a value being about two times the maximum rating of the drive motor M and is, in this embodiment, set to a value being 1.5 times the maximum rating.

Here, if it is decided in step S232 that the present output Pout is equal to or more than the maximum output Pmax, the process goes on to step S233 in which the target duty ratio DM is set to a specific maximum value Dmax. In step S234, a temperature TM of the drive motor M detected by the temperature sensor 24 is compared with a reference temperature Tref. In this embodiment, the reference temperature Tref is set to 90°C.

Here, if the temperature TM is the reference temperature Tref or more, the process goes on to step S235 in which the present target duty ratio DM is multiplied by a correction coefficient smaller than "1" and the calculated result is taken as a new target duty ratio DM. In this embodiment, the correction coefficient is defined as "0.5^{k5}", and the initial value of the exponent k5 is set to "1". Accordingly, a value being 0.5 times the present target duty ratio DM is taken as a target duty ratio DM. In step S236, the exponent k5 is incremented by "1".

On the other hand, if it is decided in step S234 that the temperature TM is less than the reference temperature Tref, the process goes on to step S236 in which the exponent k5 is set to the initial value "1".

In this way, according to this embodiment, since the output of the drive motor M is limited and also if the temperature of the drive motor M is increased, the target duty ratio DM is gradually reduced, it is possible to prevent a severe operation of the drive motor M. Also, since the upper limit of the output of the drive motor M lies within a range being two times the rating of the drive motor M, it is possible to obtain a self-running power from the drive motor M without a severe operation of the drive motor M.

Referring again to FIG. 3, in step S25, a control of a current of the drive motor M based on the target duty ratio thus determined is executed.

Additionally, if it is decided in step S16 whether or not either of the brake switches 12 and 14 is in the on-state, that is, the vehicle is on braking, the process goes on to step S21. In step S21, it is decided, on the basis of the vehicle speed V, whether or not the vehicle is on running.

Here, if the vehicle speed V is larger than "0", it is decided in step S21 that the vehicle is on running, and the process goes on to step S22. In step S22, a value being 20% (or which may be 0%) of the present target duty ratio DM, or a value being 20% (or which may be 0%) of the maximum value Dmax of the target duty ratio is set as a target duty ratio DM for allowing the drive motor M to generate a drive force being small enough to bring about a state in which no load is apparently applied to the drive motor M.

If it is decided in step S21 that the vehicle is on stoppage, the process goes on to step S186 of the above-described routine of "rapid acceleration suppressing control" shown in FIG. 4. As a result, the target duty ratio DM is rapidly reduced, and then gradually increased.

In this way, according to this embodiment, if a self-running operation is performed in a stoppage state of the vehicle with braking actuated, a self-running power to be generated by the drive motor is gradually increased to a value corresponding to an operated amount of self-running, it is possible to prevent "slip-down" of the vehicle upon start-up of the vehicle on a slope.

It is decided in step S17 that the vehicle is in the driver's non-riding state, the process goes on to step S24. In step S24, to allow the drive motor M to generate a self-running power optimum for hand-pushing drive of the vehicle, a value being 20% of the present target duty ratio DM, or a value being 20% of the maximum value Dmax of the target duty ratio is set as a new target duty ratio DM.

In this way, according to this embodiment, since a self-running power matched to a walking speed can be generated by using the self-running operation input means (throttle lever 16) for generating a usual self-running power, the motor-drive bicycle in this embodiment is allowed to achieve a self-running function matched to a walking speed without provision of a plurality of self-running operation input means.

Further, according to this embodiment, it is decided whether or not a self-running operation is performed in the driver's non-riding state, and a self-running power matched to a walking speed is generated only when it is decided that the self-running operation is performed in the driver's non-riding state, and accordingly, it is possible to eliminate an inconvenience that a self-running power matched to a walking speed is outputted in the driver's riding state.

In the above-described embodiment, the rotational speed of the drive wheel 31 is directly detected by the vehicle speed sensor 18 and the vehicle speed V is detected on the basis of the rotational speed of the drive wheel 31; however, the present invention is not limited thereto. For example, the vehicle speed V may be calculated on the basis of the rotational speed NM of the drive motor M detected by the motor rotation sensor 25 and the gear step G. Alternatively, the vehicle speed V may be calculated on the basis of the rotational speed of the crank pedals 38 detected by the crank pedal rotation sensor 22 and the gear step G.

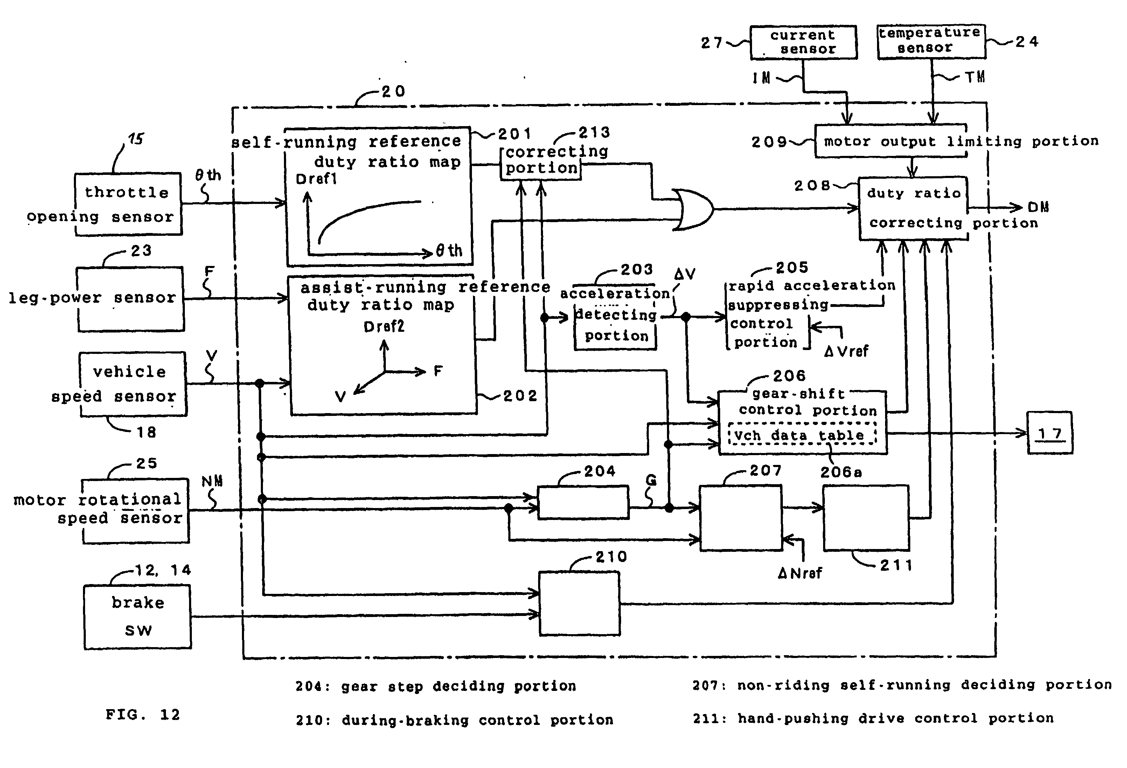

In the above-described embodiment, the reference duty ratio Dref1 of the drive current IM to be supplied to the drive motor M during self-running is registered, in the self-running reference duty ratio map 201, as the function of the throttle opening angle θth, the vehicle speed V, and the gear step G; however, the present invention is not limited thereto. For example, as shown in FIG. 12, only a relationship between the reference duty ratio Dref1 and the throttle opening angle θth may be registered, as a map, in the self-running reference duty ratio map 201, and the reference duty ratio Dref1 retrieved on the basis of the throttle opening angle θth may be suitably corrected on the basis of the vehicle speed V and the gear step G by the correcting portion 213.

The invention provides a motor-driven bicycle including an automatic gear shifter, which is capable of improving a shift feeling upon gear-shift and controlling a self-running power of a drive motor determined on the basis of an amount of a self-running operation by a driver as a function of a braking state and a vehicle speed. To achieve this, a motor-driven bicycle includes a drive motor M for generating a self-running power in response to a self-running operation by a driver, a gear shifter connected between the drive motor M and a drive wheel, and means for detecting a vehicle speed. This motor-driven bicycle further includes a self-running reference duty ratio map 201 for determining a self-running power to be generated by the drive motor M, that is, a duty ratio of an AC exciting current to be supplied to the drive motor M on the basis of an operated amount of a self-running operation by a driver, a gear step of the gear shifter, and a vehicle speed. In the self-running reference duty ratio map 201, a reference duty ratio Dref1 of a drive current to be supplied to the drive motor M at the time of self-running is previously registered as a function of a throttle angle θth detected by a throttle opening sensor 15. A during-braking control portion 210 decides whether or not braking operation is performed on the basis of the states of brake switches 12 and 14, and receives a vehicle speed V detected by a vehicle speed sensor 18. A duty ratio correcting portion 208 corrects the reference duty ratio Dref1 obtained from the duty ratio map 201 on the basis of a control signal from the during-braking control portion 210.

## Claims

1. A motor-driven bicycle including a drive motor (M) adapted to generate a self-running power in response to a throttle lever operation by a driver, a gear shifter (19) connected between said driven motor (M) and a drive wheel (31), means for detecting a vehicle speed, and
self-running power determining means (20) adapted to determine a self-running power to be generated by said drive motor, on the basis of an operated amount of the throttle lever (16), **characterized in that**
said self-running power determining means (20) is further adapted to determine said self-running power, in addition to the operated amount of said throttle lever (16), on the basis of a gear step of said gear-shifter, and a vehicle speed (V).

2. A motor-driven bicycle according to claim 1,
further including:
crank pedals (38L; R);
an output shaft (34) to which a drive force generated by said drive motor (M) is transmitted;
a rotator (36) connected between said crank pedals and said output shaft, said rotator being allowed to receive a leg-power inputted from said crank pedals and the drive force inputted to said output shaft and to rotate by the leg-power and the drive force and not allowed to rotate said crank pedals accompanied by its rotation; and
a crank sensor (22) for detecting a rotational speed of said rotator;
wherein the vehicle speed (V) is detected on the basis of the rotational speed of said rotator detected by said crank sensor.

3. A motor-driven bicycle according to claim 1,
further including a rotation sensor (25) for detecting a rotational speed of said drive motor (M), wherein the vehicle speed (V) is detected on the basis of the rotational speed of said drive motor and a gear step of said gear shifter (19).

4. A motor-driven bicycle according to claim 1,
further including a rotation sensor (25) for detecting a rotational speed of said drive motor (M), wherein the gear step of said gear shifter (19) is decided on the basis of the rotational speed of said drive motor (M) and the vehide speed (V).

5. A motor-driven bicycle according to claim 1,
wherein said self-running determining means (20) has a mapping table (201) for giving a self-running power to be generated by said drive motor (M), which power corresponds to each gear step of said gear shifter, with the operated amount of the throttle lever operation and the vehicle speed (V) taken as parameters.

6. A motor-driven bicycle according to one of the preceding claims,
wherein said self-running power determining means (20) includes:
a mapping table (201) for giving a self-running power to be generated by said drive motor (M) with the operated amount of the throttle lever operation taken as parameters; and
correcting means (208) for correcting the self-running power given by said mapping table (201) on the basis of the vehicle speed (V) and a gear step of said gear shifter.

7. A motor-driven bicycle according to claim 5 or 6,
wherein the self-running power generated by said drive motor (M) is controlled by varying a duty ratio (Dref1) of an AC exciting current to be supplied to said drive motor (M), and a duty ratio (Dref2) of the AC exciting current corresponding to a specific self-running power is registered in said mapping table.

8. A motor-driven bicycle according to one of the preceding claims, **characterized in that**
said bicycle includes means (12, 14) for detecting a braking operation and outputting signals indicating a braking operation and a control means (210) adapted to control said self-running power on the basis of said signals indicating a braking operation and a vehicle speed (V), respectively.

9. A motor-driven bicycle according to claim 8,
wherein when the braking operation is detected during running of the vehicle, said control means (210) allows said drive motor (M) to generate a drive force being small enough to bring about a state in which no load is apparently applied to said drive motor (M).

10. A motor-driven bicycle according to claim 8 or 9,
wherein when the throttle lever operation is performed in a vehicle stoppage state in which the braking operation is performed, said control means (210) allows said drive motor (M) to generate a drive force corresponding to an amount of the throttle lever operation.

11. A motor-driven bicycle according to claim 9,
wherein the drive force being small enough to bring about a state in which no load is apparently applied to said drive motor (M) is a value allowing self-running at a walking speed or "0".

12. A motor-driven bicycle according to claim 10,
wherein when the throttle lever operation is performed from the vehicle stoppage state in which the braking operation is performed, said control means (210) gradually increases the self-running power generated by said drive motor up to a value corresponding to the amount of the throttle lever operation.

## Patentansprüche

1. Motorgetriebenes Fahrrad, das einen Antriebsmotor (M) enthält, der dafür ausgelegt ist, eine Selbstfahrleistung in Reaktion auf eine Fahrhebelbetätigung von einem Fahrer zu erzeugen, eine Gangwechselvorrichtung (19), die zwischen dem Antriebsmotor (M) und einem Antriebsrad (31) angeordnet und verbunden ist, Mittel zum Erfassen einer Fahrzeuggeschwindigkeit, und ein Selbstfahrleistungsbestimmungsmittel (20), das dafür ausgelegt ist, eine Selbstfahrleistung, die vom Antriebsmotor zu erzeugen ist, auf der Grundlage eines Betätigungsmaßes des Fahrhebels (16) zu bestimmen, **dadurch gekennzeichnet, dass**
das Selbstfahrleistungsbestimmungsmittel (20) ferner dafür ausgelegt ist, die Selbstfahrleistung auf der Grundlage einer Getriebestufe der Gangwechselvorrichtung und einer Fahrzeuggeschwindigkeit (V) zusätzlich zum Betätigungsmaß des Fahrhebels (16) zu bestimmen.

2. Motorgetriebenes Fahrzeug nach Anspruch 1, das ferner enthält:
Kurbelpedale (38L, R);
eine Abtriebswelle (34), auf die die vom Antriebsmotor (M) erzeugte Antriebskraft übertragen wird;
einen Rotor (36), der zwischen den Kurbelpedalen und der Abtriebswelle angeordnet und verbunden ist, wobei dem Rotor erlaubt wird, eine von den Kurbelpedalen eingegebene Beinkraft und eine in die Abtriebswelle eingegebene Antriebskraft aufzunehmen und mittels der Beinkraft und der Antriebskraft zu rotieren, und nicht erlaubt wird, die Kurbelpedale einhergehend mit seiner Rotation zu drehen; und
einen Kurbelsensor (22) zum Erfassen einer Drehzahl des Rotors;
wobei die Fahrzeuggeschwindigkeit (V) auf der Grundlage der vom Kurbelsensor erfassten Drehzahl des Rotors erfasst wird.

3. Motorgetriebenes Fahrrad nach Anspruch 1,
das ferner einen Rotationssensor (25) zum Erfassen einer Drehzahl des Antriebsmotors (M) enthält, wobei die Fahrzeuggeschwindigkeit (V) auf der Grundlage der Drehzahl des Antriebsmotors und einer Getriebestufe der Gangwechselvorrichtung (19) erfasst wird.

4. Motorgetriebenes Fahrrad nach Anspruch 1,
das ferner einen Rotationssensor (25) zum Erfassen einer Drehzahl des Antriebsmotors (M) enthält, wobei die Getriebestufe der Gangwechselvorrichtung (19) auf der Grundlage der Drehzahl des Antriebsmotors (M) und der Fahrzeuggeschwindigkeit (V) festgelegt wird.

5. Motorgetriebenes Fahrrad nach Anspruch 1,
wobei das Selbstfahrbestimmungsmittel (20) eine Kennfeldtabelle (201) aufweist, um eine vom Antriebsmotor (M) zu erzeugende Selbstfahrleistung vorzugeben, wobei die Leistung der jeweiligen Getriebestufe der Gangwechselvorrichtung entspricht, wobei das Betätigungsmaß der Fahrhebelbetätigung und die Fahrzeuggeschwindigkeit (V) als Parameter genommen werden.

6. Motorgetriebenes Fahrrad nach irgendeinem der vorangehenden Ansprüche,
bei dem das Selbstfahrleistungsbestimmungsmittel (20) enthält:
eine Kennfeldtabelle (201) zum Vorgeben einer Selbstfahrleistung, die vom Antriebsmotor (M) zu erzeugen ist, wobei das Betätigungsmaß der Fahrhebelbetätigung als Parameter genommen wird; und
ein Korrekturmittel (208) zum Korrigieren der von der Kennfeldtabelle (201) vorgegebenen Selbstfahrleistung auf der Grundlage der Fahrzeuggeschwindigkeit (V) und einer Getriebestufe der Gangwechselvorrichtung.

7. Motorgetriebenes Fahrrad nach Anspruch 5 oder 6, bei dem die vom Antriebsmotor (M) erzeugte Selbstfahrleistung gesteuert wird, indem ein Tastverhältnis (Dref1) eines Erregerwechselstroms, der dem Antriebsmotor (M) zuzuführen ist, variiert wird, wobei ein Tastverhältnis (Dref2) des Erregerwechselstroms, das einer spezifischen Selbstfahrleistung entspricht, in der Kennfeldtabelle registriert ist.

8. Motorgetriebenes Fahrrad nach irgendeinem der vorangehenden Ansprüche,
**dadurch gekennzeichnet, dass**
das Fahrrad Mittel (12, 14) enthält zum Erfassen einer Bremsbetätigung und von Ausgangssignalen, die eine Bremsbetätigung anzeigen, sowie ein Steuermittel (210), das dafür ausgelegt ist, die Selbstfahrleistung auf der Grundlage der Signale, die eine Bremsoperation anzeigen, bzw. einer Fahrzeuggeschwindigkeit (V) zu steuern.

9. Motorgetriebenes Fahrrad nach Anspruch 8,
bei dem dann, wenn eine Bremsbetätigung während des Fahrens des Fahrzeugs erfasst wird, das Steuermittel (210) dem Antriebsmotor (M) erlaubt, eine Antriebskraft zu erzeugen, die klein genug ist, um einen Zustand herbeizuführen, in welchem scheinbar keine Last auf den Antriebsmotor (M) ausgeübt wird.

10. Motorgetriebenes Fahrrad nach Anspruch 8 oder 9,
bei dem dann, wenn die Fahrhebeloperation in einem Fahrzeugstoppzustand durchgeführt wird, in welchem die Bremsbetätigung durchgeführt wird, das Steuermittel (210) dem Antriebsmotor (M) erlaubt, eine Antriebskraft entsprechend einem Maß der Fahrhebelbetätigung zu erzeugen.

11. Motorgetriebenes Fahrrad nach Anspruch 9,
bei dem eine Antriebskraft, die klein genug ist, um einen Zustand herbeizuführen, in welchem scheinbar keine Last auf den Antriebsmotor (M) ausgeübt wird, ein Wert ist, der ein Selbstfahren bei einer Gehgeschwindigkeit oder "0" erlaubt.

12. Motorgetriebenes Fahrrad nach Anspruch 10,
bei dem dann, wenn die Fahrhebelbetätigung ausgehend vom Fahrzeugstoppzustand durchgeführt wird, in welchem die Bremsbetätigung durchgeführt wird, das Steuermittel (210) die vom Antriebsmotor erzeugte Selbstfahrleistung allmählich bis zu einem Wert erhöht, der dem Maß der Fahrhebelbetätigung entspricht.

## Revendications

1. Bicyclette entraînée par moteur comprenant un moteur d'entraînement (M) adapté pour générer une puissance de roulement automatique en réponse à l'actionnement d'un levier d'étranglement par un conducteur, un dispositif de changement de vitesse (19) raccordé entre ledit moteur d'entraînement (M) et une roue motrice (31), des moyens pour détecter une vitesse de véhicule, et
des moyens de détermination d'une puissance de roulement automatique (20) adaptés pour déterminer une puissance de roulement automatique devant être générée par ledit moteur d'entraînement, sur la base d'une valeur appliquée du levier d'étranglement (16) **caractérisée en ce que**
lesdits moyens de détermination de la puissance de roulement automatique (20) sont adaptés en outre pour déterminer ladite puissance de roulement automatique, en plus de la valeur appliquée dudit levier d'étranglement (16) sur la base d'un rapport de boîte dudit dispositif de changement de vitesse, et une vitesse de véhicule (V).

2. Bicyclette entraînée par moteur selon la revendication 1, comprenant en outre :
des pédales à manivelle (38L ; R) ;
un arbre de sortie (34) auquel est transmise une force motrice générée par ledit moteur d'entraînement (M) ;
un rotateur (36) raccordé entre lesdites pédales à manivelle et ledit arbre de sortie, ledit rotateur pouvant recevoir une puissance appliquée par la jambe, sur lesdites pédales à manivelle et la force motrice appliquée audit arbre de sortie et entraînée en rotation par la puissance de jambe et la force motrice et ne pouvant pas faire tourner lesdites pédales à manivelle accompagnées par sa rotation ; et
un capteur (22) destiné à détecter une vitesse de rotation dudit rotateur ; dans lequel la vitesse de véhicule (V) est détectée sur la base de la vitesse de rotation dudit rotateur détectée par ledit capteur.

3. Bicyclette entraînée par moteur selon la revendication 1, comprenant en outre un détecteur de rotation (25) pour détecter une vitesse de rotation dudit moteur d'entraînement (M), dans laquelle la vitesse de véhicule (V) est détectée sur la base de la vitesse de rotation dudit moteur d'entraînement et un rapport de boite dudit dispositif de changement de vitesse (19).

4. Bicyclette entraînée par moteur selon la revendication 1, comprenant en outre un détecteur de rotation (25) pour détecter une vitesse de rotation dudit moteur d'entraînement (M), dans laquelle le rapport de boîte dudit dispositif de changement de vitesse (19) est fixé sur la base de la vitesse de rotation dudit moteur d'entraînement (M) et de la vitesse de véhicule (V).

5. Bicyclette entraînée par moteur selon la revendication 1, dans laquelle lesdits moyens de détermination du roulement automatique (20) ont un index (201) pour donner une puissance de roulement automatique devant être générée par ledit moteur d'entraînement (M) dont la puissance correspond à chaque rapport de boîte dudit dispositif de changement de vitesse, la valeur appliquée par l'actionnement du levier d'étranglement et la vitesse de véhicule (V) étant prises comme paramètres.

6. Bicyclette entraînée par moteur selon l'une des revendications précédentes, dans laquelle lesdits moyens de détermination (20) de la puissance de roulement automatique comprennent :
un index (201) pour donner une puissance de roulement automatique devant être générée par ledit moteur d'entraînement (M) la valeur appliquée par l'actionnement du levier d'étranglement étant prise comme paramètres ; et
des moyens de correction (208) destinés à corriger la puissance de roulement automatique donnée par ledit index (201) sur la base de la vitesse du véhicule (V) et d'un rapport de boîte dudit dispositif de changement de vitesse.

7. Bicyclette entraînée par moteur selon la revendication 5 ou 6, dans laquelle la puissance de roulement automatique générée par ledit moteur d'entraînement (M) est commandée en variant un facteur de marche (Dref1) d'un courant d'excitation alternatif devant être fourni audit moteur d'entraînement (M), et un facteur de marche (Dref2) du courant d'excitation alternatif correspondant à une puissance spécifique de roulement automatique est enregistré dans ledit index.

8. Bicyclette entraînée par moteur selon l'une des revendications précédentes, **caractérisée en ce que** ladite bicyclette comprend des moyens (12, 14) destinés à détecter une opération de freinage et des signaux de sortie indiquant une opération de freinage et des moyens de commande (210) adaptés pour commander ladite puissance de roulement automatique sur la base desdits signaux indiquant une opération de freinage et une vitesse de véhicule (V), respectivement.

9. Bicyclette entraînée par moteur selon la revendication 8, dans laquelle lorsque l'opération de freinage est détectée pendant le fonctionnement du véhicule, lesdits moyens de commande (210) permettent audit moteur d'entraînement (M) de générer une force motrice suffisamment petite pour provoquer un état dans lequel aucune charge n'est apparemment appliquée audit moteur d'entraînement (M).

10. Bicyclette entraînée par moteur selon les revendications 8 ou 9, dans laquelle le fonctionnement du levier d'étranglement est réalisé dans un état d'arrêt du véhicule dans lequel l'opération de freinage est réalisée, lesdits moyens de commande (210) permettent audit moteur d'entraînement (M) de générer une force motrice correspondant à une valeur du fonctionnement du levier d'étranglement.

11. Bicyclette entraînée par moteur selon la revendication 9, dans laquelle la force motrice suffisamment petite pour provoquer un état dans lequel aucune charge n'est apparemment appliquée audit moteur d'entraînement (M), est une valeur permettant le roulement automatique à une vitesse de marche ou « 0 ».

12. Bicyclette entraînée par moteur selon la revendication 10, dans laquelle lorsque le fonctionnement du levier d'étranglement est effectué à partir de l'état d'arrêt du véhicule dans lequel l'opération de freinage est réalisée, lesdits moyens de commande (210) augmentent progressivement la puissance de roulement automatique générée par ledit moteur d'entraînement jusqu'à une valeur correspondant à la valeur d'actionnement du levier d'étranglement.
